# EUROPÄISCHE PATENTSCHRIFT

(11) **EP 3 670 161 B1**
(45) Veröffentlichungstag und Bekanntmachung des Hinweises auf die Patenterteilung: **08.02.2023**
(21) Anmeldenummer: 19217425.8
(22) Anmeldetag: 18.12.2019
(51) Int. Cl.: B29C 70/44, B29C 70/08, B29C 70/70, B29C 33/76, B29C 49/00, B64C 3/20, B29D 99/00, B29C 33/44, B64C 3/18, B64C 3/24, B29L 31/30, B29C 33/52

(54) **VERFAHREN ZUR HERSTELLUNG VON TORSIONSBOXEN**
METHOD FOR PRODUCING TORSION BOXES
PROCÉDÉ DE FABRICATION DE BOÎTES DE TORSION

(30) Priorität: 18.12.2018 LU 101053
(43) Veröffentlichungstag der Anmeldung: 24.06.2020
(73) Patentinhaber: Airbus Operations GmbH, 21129 Hamburg (DE)
(72) Erfinder: Kuhlmann, Guido, 21129 Hamburg (DE); Schröder, René, 21129 Hamburg (DE); Rombs, Wilhelm, 21129 Hamburg (DE); Temmen, Hubert, 21129 Hamburg (DE)

(56) Entgegenhaltungen:
- EP-A1- 2 038 100
- DE-A1-102008 034 203
- DE-A1-102013 106 876
- US-A- 3 629 030

## Beschreibung

### Gebiet der Erfindung

Die vorliegende Erfindung bezieht sich auf Torsionsboxen mit einer hochintegrierten inneren Struktur.

### Hintergrund der Erfindung

Torsionsboxen (auch Torsionskästen) werden bei Flügeln, Leitwerken, Steuerelementen und Hochauftriebssystemen von Flugzeugen eingesetzt. Torsionsboxen erlauben es dabei, solche Flugzeugkomponenten besonders verwindungssteif zu fertigen. Meist werden dabei obere und untere Häute durch Stringer, Holme und Querrippen versteift.

Heutzutage werden insbesondere in der Luftfahrtindustrie Verbundwerkstoffe mit einer organischen Matrix und Endlosfasern aus CFK (Kohlefaserverstärkter Kunststoff) in einer Vielzahl von Strukturelementen eingesetzt. Auch die vorgenannten Torsionsboxen können unter Verwendung von CFK hergestellt werden. Typischerweise werden alle Strukturelemente, die eine Torsionsbox bilden getrennt hergestellt und dann mit Hilfe von Nieten und komplizierten Werkzeuge verbunden, um die erforderlichen Toleranzen zu erreichen, die durch die Aerodynamik-, Montage- und Konstruktionsanforderungen gegeben sind.

Ein bekanntes Verfahren zur Herstellung dieser Elemente verwendet die Prepreg-Technik. In einem ersten Schritt erfolgt ein flacher Aufbau von Verbund-Prepreg-Lagen für jedes Element. Dann wird mittels eines klassischen Warmumformprozesses oder eines Pressformverfahrens eine laminierte Vorform des Elements mit der erforderlichen Form hergestellt. Anschließend wird der laminierte Vorformling ausgehärtet. Der Aufwand der Herstellung einer inneren Struktur einer Torsionsboxen, die mit diesem Verfahren hergestellt wird, sind hoch, da eine größere Zahl an Schritten unabhängig voneinander ausgeführt werden müssen.

Bekannt ist aus der EP 2698241 ein Verfahren zum Herstellen einer Torsionsbox einer Flugzeugtragfläche, wobei die Torsionsbox-Innenstruktur als ein Satz bereits ausgehärteter laminierter Vorformen aus einem Verbundmaterial bereitgestellt wird.

DE 102013106876 A1 betrifft ein Verfahren zur Herstellung von hohlen Bauteilen unter Verwendung von Formkernen aus einem Granulat und einem löslichen Bindemittel. Dabei wird der Formkern mit Fasern umwickelt oder umflochten, das Bindemittel später aufgelöst und die Bestandteile des Formkerns aus dem hohlen Bauteil ausgespült werden.

WO 2008/003733 A1 betrifft die Verwendung einer Mehrzahl von longitudinal ausgedehnten Hohlkörpern als Formkern bei der Herstellung einen Bauteils aus Faserverbundwerkstoffen.

Ausgehend von all dem fehlte es an einem Verfahren, dass eine möglichst einfache Herstellung von Torsionsboxen ermöglichte und nach Möglichkeit ohne Verbindungselemente wie Niete auskommt.

### Beschreibung der Erfindung

Überraschend und für den Fachmann nicht vorhersehbar hat sich nun herausgestellt, dass ein Verfahren gemäß Anspruch 1 zur Herstellung von Torsionsboxen umfassend die Schritte: Bereitstellen eines ersten starren Formwerkzeugs 1, Ablegen von Verstärkungsfasern 2 auf diesem starren Formwerkzeug 1, Bereitstellen wenigstens eines weiteren starren Formwerkzeugs 3, Ablegen von Verstärkungsfasern 4 auf diesen starren Formwerkzeugen 3, Fixieren der Formwerkzeuge 3 mit den Verstärkungsfasern 4 so dass die Verstärkungsfasern 4 zum Teil die Verstärkungsfasern 2 berühren und eine mit wenigstens einem weiteren Formwerkzeug bildbare hohle Struktur 11 vorbilden, Bereitstellen wenigstens eines starren Kerns 5, Einbringen dieses oder dieser starren Kerne 5 jeweils in ein flexibles Werkzeug 6, Positionieren von Verstärkungsfasern 7 auf den Werkzeugen 6, Entfernen der starren Kerne 5, Bereitstellen wenigstens eines weiteren starren Kerns 8, Einbringen dieses oder dieser weiteren starren Kerne 8 jeweils in ein weiteren flexibles Werkzeug 9, optional Positionieren von weiteren Verstärkungsfasern 10 auf den weiteren Werkzeugen 9, Entfernen der weiteren starren Kerne 8, Einbringen der Verstärkungsfasern 7 auf den Werkzeugen 6 und gegebenenfalls der weiteren Verstärkungsfasern 10 auf den weiteren Werkzeugen 9 in die vorgebildete hohle Struktur 11, Verschließen der vorgebildeten hohlen Struktur 11 mit wenigstens einem abschließenden Formwerkzeug 12, das mit Verstärkungsfasern 13 belegt ist, Aufblasen der flexiblen Werkzeuge 6 und der weiteren flexiblen Werkzeuge 9 unter Bildung einer inneren Stützstruktur 14, die die aus den Verstärkungsfasern 2,4 und 13 gebildete Hohlstruktur 11 aussteift, und Konsolidieren der Verstärkungsfasern den Nachteilen des Standes der Technik abhilft. Durch dieses Verfahren kann eine Torsionsbox auch Faserverbundmaterial in einem Stück hergestellt werden. Es kann auf das Vorfertigen ausgehärteter Einzelkomponenten verzichtet werden. Weiter entfällt die Notwendigkeit die Einzelkomponenten miteinander zu verbinden, weder Kleben, noch Vernieten oder Verbolzen sind erforderlich. Weiter kann durch Variation der Drücke, die innerhalb der einzelnen Werkzeuge herrschen, die Form und der Grad einer möglichen Wölbung der inneren Stützstruktur der Torsionsbox beeinflusst werden.

Bei dem erfindungsgenmäßen Verfahren ist es vorteilhaft, die starren Kerne 5 erst zu entfernen, nachdem die flexiblen Werkzeuge 6 und die weiteren flexiblen Werkzeuge 9 in die vorgebildete Struktur 11 eingebracht wurden. Besonders vorteilhaft ist es, dieses Entfernen der starren Kerne erst vorzunehmen, nachdem die vorgebildete Struktur 11 mit dem abschließenden Werkzeug 12 verschlossen wurde.

Weiter kann es vorteilhaft sein die weiteren flexiblen Werkzeuge 9 nicht mit Fasern zu belegen, dann wird die innere Stützstruktur der Torsionsbox nur aus dem Fasermaterial auf dem flexiblen Werkzeug 6 geformt. Es ist weiter bevorzugt, wenn die starren Kerne 5 und/oder weiteren starren Kerne 8 Rohre sind. Es ist weiter bevorzugt, wenn die Verstärkungsfasern 10 auf den weiteren Werkzeugen 9 vor dem Einbringen in die vorgebildete hohle Struktur 11 gefaltet oder geknittert werden. In den meisten Fällen müssen die Verstärkungsfasern 10 auf den weiteren Werkzeugen 9 größer sein, als die vorhandene Öffnung und sie lassen sich nach dem Entfernen des starren Kerns leichter in die vorgebildete Struktur 11 einbringen. Es ist weiter bevorzugt, dass die innere Stützstruktur 14 die Form von Waben, Polygonen, Kreuzen oder Seifenblasen hat. Es ist weiter bevorzugt, wenn die Verstärkungsfasern 7 und/oder 10 durch Wickeln oder Flechten auf den starren Kernen 5 mit den flexiblen Werkzeugen 6 und/oder Wickeln oder Flechten auf den weiteren starren Kernen 8 mit den weiteren flexiblen Werkzeugen 9 positioniert werden. Es ist weiter bevorzugt, wenn an den Berührungspunkten von innerer Stützstruktur 14 und Hohlstruktur 11 Aufdickungen 15 aus Verstärkungsfasern (Zwickel) eingebracht werden. Es ist weiter bevorzugt, wenn die Aufdickungen 15 aus Verstärkungsfasern (Zwickel) aus einem Teil der weiteren Verstärkungsfasern 10 gebildet werden, beispielsweise, indem eine Falte an Verstärkungsfasermateriallage in eine dafür geeignete Lage gebracht wird. Es ist weiter bevorzugt, wenn die Verstärkungsfasern trockene Kohlenstoffasern sind. Dann ist es von Vorteil, wenn in dem oder den starren Formwerkzeugen 1, 3 und/oder 12 Kanäle zum Einspritzen von Matrixmaterial vorgesehen sind. Es ist alternativ bevorzugt, wenn die Verstärkungsfasern mit Matrixharz vorimprägnierte Kohlenstoffasern sind. Es ist weiter bevorzugt, wenn das Konsolidieren durch Temperieren auf Temperaturen von 80 bis180°C erfolgt. Es ist weiter bevorzugt, wenn das Konsolidieren unter erhöhtem Druck erfolgt. Es ist weiter bevorzugt, wenn das Konsolidieren im Autoklaven erfolgt. Die Erfindung umfasst auch ein Bauteil für ein Flugzeug erhältlich nach einem erfindungsgemäßen, insbesondere eine Torsionsbox von Flügeln, Leitwerken, Steuerelementen oder Hochauftriebssystemen von Flugzeugen.

Die oben beschriebenen Aspekte und weitere Aspekte, Merkmale und Vorteile der Erfindung können ebenfalls aus den Beispielen der Ausführungsformen entnommen werden, welche im Folgenden unter Bezugnahme auf die anhängenden Zeichnungen beschrieben werden.

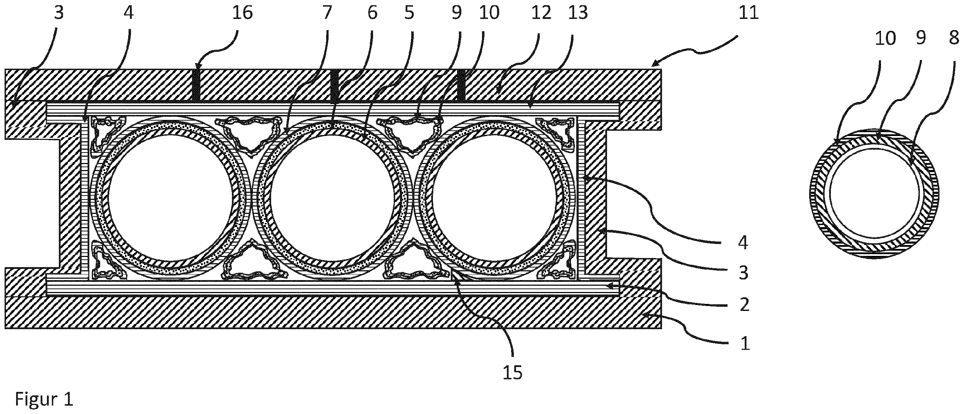

Figur 1 zeigt den wichtigsten Verfahrensschritt des erfindungsgemäßen Verfahrens vor dem Ausbilden der erfindungsgemäßen inneren Stützstruktur und vor dem Entfernen innen liegender Formwerkzeuge.

Um das erfindungsgemäß Verfahren ausführen zu können, sind mehrere starre Formwerkzeuge erforderlich. Auf ein erstes starres Formwerkzeug 1 können erste Verstärkungsfasern 2 aufgebracht werden. Das erste starre Formwerkzeug 1 kann aus faserverstärkte Kunststoff oder aus Metall bestehen. Als Verstärkungsfasern können Kohlenstofffasern, Glasfasern oder synthetische Fasern etwa aus Aramid oder Polyester verwendet werden. Dabei können die Fasern als Gewebe, Bänder oder lose Fasern aufgebracht werden. Die Ausrichtung der Fasern wird dabei durch die Konstruktion bestimmt, insbesondere können die Fasern oder Faserbündel in verschiedenen Richtungen verlaufen. Die Fasern können trockene Fasern oder mit Matrixmaterial vorimprägniert ausgerüstet sein. Die Vorimprägnierung kann thermoplastisches oder aushärtbares Matrixmaterial sein.

Auf das mit Verstärkungsfasern 2 belegte starre Formwerkzeug 1 können weitere starre Formwerkzeuge 3, die ihrerseits mit Verstärkungsfasern 4 belegt sein können, positioniert und befestigt werden. Dadurch wird eine hohle Struktur vorgebildet. In diese vorgebildete hohle Struktur 11 können weitere starre Werkzeuge, die mit Verstärkungsfasern belegt sein können, eingebracht werden.

Solche weiteren optional mit Verstärkungsfasern 7 belegten starren Kernwerkzeuge 5 werden vor dem Einbringen in die vorgebildete hohle Struktur 11 vorbereitet. Dazu wird auf ein starres Kernwerkzeug 5 zunächst ein flexibles Werkzeug 6 aufgebracht, welches dann mit Verstärkungsfasern 7 belegt werden kann. Der starren Kern 5 kann die Form eines Rohres aufweisen und aus Stahl, einem anderen Metall oder faserverstärktem Kunststoff hergestellt sein. Das flexible Werkzeug 6 kann ein aufblasbarer Schlauch sein, der aus einem flexiblen, gasdichten Material mit Ablöseeigenschaften besteht und das vorteilhaft eine gewisse Dehnbarkeit aufweist. Das flexible Werkzeug 6 ist mit Mitteln verbunden, die ein Aufblasen und Verschließen des aufgeblasenen Werkzeugs erlauben, beispielsweise ein Schlauch und ein Ventil. Solche flexiblen Werkzeuge 6 können als Schlauchkerne bezeichnet werden. Das Belegen der starren Kerne 5 mit flexiblen Werkzeugen 6 durch Verstärkungsfasern 7 kann durch Umwickeln oder Flechten erfolgen.

Es werden verschiedene derartige flexible Werkzeuge mit starren Kernen und gegebenenfalls Verstärkungsfasern vorbereitet. Die ersten starren Kerne 5 mit flexiblen Werkzeugen 6 und Verstärkungsfasern 7 können mitsamt ihres Kerns 5 in die vorgebildete innere Struktur 11 eingebracht werden. Weitere Anordnungen aus starren Kernen 8, flexiblen Werkzeugen 9 und gegebenenfalls Verstärkungsfasern 10 werden außerhalb der vorgebildeten inneren Struktur 11 von ihren starren Kernen 8 befreit, flexibles Werkzeug 9 und gegebenenfalls Verstärkungsfasern 10 gemeinsam gefaltet oder geknittert und in Hohlräume zwischen Verstärkungsfasern 7, 2, 4 der starren Kerne 5 und der vorgebildeten Struktur 11 eingebracht. Zusätzlich können in die Hohlräume zwischen Verstärkungsfasern der ersten starren Kerne und der vorgebildete innerer Struktur Aufdickungen 15, sogenannte Zwickel eingebracht werden. Diese werden so positioniert, dass sie möglichst frei von Hohlräumen an Aufeinandertreffen an Faserlagen der mit Verstärkungsfasern legten einzeln Werkzeugen zu liegen kommen. Solche Aufdickungen können auch durch geeignetes Formen der flexiblen Werkzeuge 9 und Verstärkungsfasern 10 gebildet werden.

Zum Ausbilden der inneren Stützstruktur 14 werden die ersten starren Kernen 5 entfernt, die vorgebildete innere Stützstruktur 14 mit einem abschließenden starren Formwerkzeug 12, das seinerseits mit Verstärkungsfasern 13 belegt ist, geschlossen. Es ist auch möglich, die vorgebildete Hohlstruktur 11 mit dem abschließenden starren Formwerkzeug 12 zu verschließen und dann die starren Kerne 5 zu entfernen.

Anschließend können die flexiblen Werkzeuge 6 aufgeblasen werden. Dadurch werden die Verstärkungsfasern 6 mit den Verstärkungsfasern 2,3,12 in innigen Kontakt gebracht. Durch zusätzliches Aufblasen der weiteren flexiblen Werkzeuge 9 werden die zuvor gefalteten Verstärkungsfasern 10 entfaltet und üben einen formgebenden Druck auf die umgebenden Verstärkungsfasern 2,4,7 und 13 aus, wodurch die innere Stützstruktur 14 final ausgebildet wird. Durch Variation der Drücke in den verschiedenen flexiblen Werkzeugen 6 und 9 kann auf die Form der inneren Stützstruktur 14 Einfluss genommen werden.

Die vorgebildete Hohlstruktur 11 mitsamt den inneren Stützstruktur 14 kann anschließend konsolidiert werden. Dazu muss im Falle von trockenen Verstärkungsfasern zunächst Harz oder ein anderes Matrixmaterial in die trockenen Fasern eingebracht werden. Dies kann in Vakuuminfusionsverfahren erfolgen. Dazu können im abschließenden Formwerkzeug 12 Injektionskanäle 16 vorgesehen werden. Bei Verwendung von vorimprägnierten Verstärkungsfasern muss keine Injektion erfolgen. Das Konsolidieren der Hohlstruktur mit der inneren Stützstruktur kann im Ofen oder Autoklaven erfolgen. Nach dem Konsolidieren können die starren Formwerkzeuge entfernt werden.

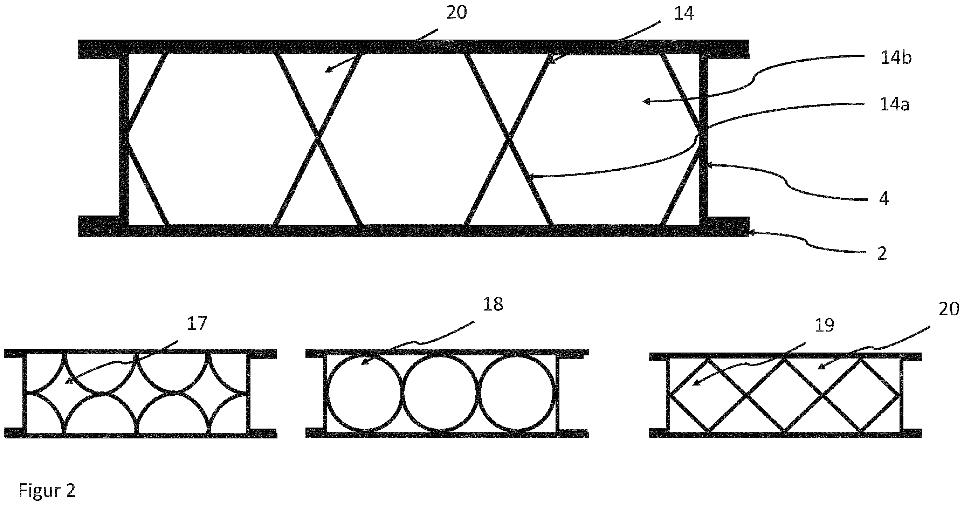

Figur 2 zeigt nach dem erfindungsgemäßen Verfahren erhältliche Hohlstrukturen 11 mit innerer Stützstruktur 14. Dabei kann die innere Stützstruktur im Schnittbild kreuzförmige 14a oder wabenförmige 14b Elemente aufweisen oder Elemente in Gestalt aufgeschnittener Schaumblasen 17 oder mizellenartiger Anordnungen 18. Auch polygonale Strukturen wie Quader/Rhomben 19 oder Dreieck 20 lassen sich erfindungsgemäß herstellen. Solche Strukturen können als Torsionsboxen verwendet werden, etwa für Flugzeuggroßbauteile wie Flügel, Seitenoder Höhenleitwerke.

Es wird angemerkt, dass beschriebenen Ausführungsformen lediglich illustrative und nicht beschränkend sind.

Während die Offenbarung illustriert und beschrieben wurde im Detail in den Beispielen und der vorangegangenen Beschreibung, ist es beabsichtigt, dass derartige Illustrationen und Beschreibungen lediglich illustrativ oder exemplarisch und nicht restriktiv sind, so dass die Offenbarung nicht durch die offenbarten Ausführungsformen beschränkt ist. In den Ansprüchen schließt das Wort "aufweisend" nicht andere Elemente aus und der unbestimmte Artikel "ein" schließt eine Mehrzahl nicht aus.

Die Erfindung ist definiert durch Anspruch 1. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden.

### Bezugszeichenliste

- 1: erstes starres Formwerkzeug
- 2, 4, 7, 10, 13: Verstärkungsfasern
- 3: weiteres starres Formwerkzeug
- 5: starrer Kern
- 6: flexibles Werkzeug
- 8: weiterer starrer Kern
- 9: weiteres flexibles Werkzeug
- 11: vorgebildete hohle Struktur
- 12: abschließendes Formwerkzeug
- 14: innere Stützstruktur
- 15: Aufdickungen
- 16: Injektionskanäle
- 17: Gestalt aufgeschnittener Schaumblasen
- 18: mizellenartige Anordnungen
- 19: Quader/Rhombus
- 20: Dreieck

## Patentansprüche

1. Verfahren zur Herstellung von Torsionsboxen von Flügeln, Leitwerken, Steuerelementen und Hochauftriebssystemen von Flugzeugen umfassend die Schritte
- Bereitstellen eines ersten starren Formwerkzeugs (1),
- Ablegen von Verstärkungsfasern (2) auf diesem starren Formwerkzeug (1),
- Bereitstellen wenigstens eines weiteren starren Formwerkzeugs (3),
- Ablegen von Verstärkungsfasern (4) auf diesen starren Formwerkzeugen (3),
- Fixieren der Formwerkzeuge (3) mit den Verstärkungsfasern (4) so dass die Verstärkungsfasern (4) zum Teil die Verstärkungsfasern (2) berühren und eine mit wenigstens einem weiteren Formwerkzeug bildbare hohle Struktur (11) vorbilden,
- Bereitstellen wenigstens eines starren Kerns (5),
- Einbringen dieses oder dieser starren Kerne (5) jeweils in ein flexibles Werkzeug (6),
- Positionieren von Verstärkungsfasern (7) auf den Werkzeugen (6),
- Entfernen der starren Kerne (5),
- Bereitstellen wenigstens eines weiteren starren Kerns (8),
- Einbringen dieses oder dieser weiteren starren Kerne (8) jeweils in ein weiteren flexibles Werkzeug (9),
- optional Positionieren von weiteren Verstärkungsfasern 10 auf den weiteren Werkzeugen (9),
- Entfernen der weiteren starren Kerne (8),
- Einbringen der Verstärkungsfasern (7) auf den Werkzeugen (6) und gegebenenfalls der weiteren Verstärkungsfasern (10) auf den weiteren Werkzeugen 9 in die vorgebildete hohle Struktur (11),
- Verschließen der vorgebildeten hohlen Struktur (11) mit wenigstens einem abschließenden Formwerkzeug (12), das mit Verstärkungsfasern (13) belegt ist,
- Aufblasen der flexiblen Werkzeuge (6) und der weiteren flexiblen Werkzeuge (9) unter Bildung einer inneren Stützstruktur (14), die die aus den Verstärkungsfasern (2), (4) und (13) gebildete Hohlstruktur (11) aussteift,
- Konsolidieren der Verstärkungsfasern.

2. Verfahren nach einem der vorangehenden Ansprüche **dadurch gekennzeichnet, dass** die starren Kerne (5) und/oder weiteren starren Kerne (8) Rohre sind.

3. Verfahren nach einem der vorangehenden Ansprüche **dadurch gekennzeichnet, dass** die Verstärkungsfasern (10) auf den weiteren Werkzeugen (9) vor dem Einbringen in die vorgebildete hohle Struktur (11) gefaltet oder geknittert werden.

4. Verfahren nach einem der vorangehenden Ansprüche **dadurch gekennzeichnet, dass** die innere Stützstruktur (14) die Form von Waben, Polygonen, Kreuzen oder aufgeschnittenen Seifenblasen hat.

5. Verfahren nach einem der vorangehenden Ansprüche **dadurch gekennzeichnet, dass** die Verstärkungsfasern (7) und/oder (10) durch Wickeln oder Flechten auf den starren Kernen (5) mit den flexiblen Werkzeugen (6) und/oder Wickeln oder Flechten auf den weiteren starren Kernen (8) mit den weiteren flexiblen Werkzeugen (9) positioniert werden.

6. Verfahren nach einem der vorangehenden Ansprüche **dadurch gekennzeichnet, dass** an den Berührungspunkten von innerer Stützstruktur (14) und Hohlstruktur (11) Aufdickungen (15) aus Verstärkungsfasern eingebracht werden.

7. Verfahren nach Anspruch 6 **dadurch gekennzeichnet, dass** die Aufdickungen (15) aus Verstärkungsfasern aus einem Teil der weiteren Verstärkungsfasern (10) gebildet werden.

8. Verfahren nach einem der vorangehenden Ansprüche **dadurch gekennzeichnet, dass** die Verstärkungsfasern trockene Kohlenstoffasern sind.

9. Verfahren nach einem der Ansprüche 1 bis 7 **dadurch gekennzeichnet, dass** die Verstärkungsfasern mit Matrixharz vorimprägnierte Kohlenstoffasern sind.

10. Verfahren nach einem der vorangehenden Ansprüche **dadurch gekennzeichnet, dass** das Konsolidieren durch Temperieren auf Temperaturen von 80 bis 180°C erfolgt.

11. Verfahren nach einem der vorangehenden Ansprüche **dadurch gekennzeichnet, dass** das Konsolidieren unter erhöhtem Druck erfolgt.

12. Verfahren nach einem der vorangehenden Ansprüche **dadurch gekennzeichnet, dass** das Konsolidieren im Autoklaven erfolgt.

## Claims

1. Method of manufacturing torsion boxes of wings, empennages, control elements and highlift systems of aircraft comprising the steps of
- providing a first rigid mould (1),
- depositing reinforcing fibres (2) on this rigid mould (1),
- providing at least one further rigid mould tool (3),
- depositing reinforcing fibres (4) on these rigid mould tools (3),
- fixing the mould tools (3) with the reinforcing fibres (4) so that the reinforcing fibres (4) partially contact the reinforcing fibres (2) and form a hollow structure (11) which can be formed with at least one further mould tool,
- providing at least one rigid core (5),
- inserting this or these rigid cores (5) each into a flexible tool (6),
- positioning reinforcing fibres (7) on the tools (6),
- removing the rigid cores (5),
- providing at least one further rigid core (8),
- inserting this or these further rigid cores (8) each into a further flexible tool (9),
- optionally positioning further reinforcing fibres 10 on the further tools (9),
- removing the further rigid cores (8),
- inserting the reinforcing fibres (7) on the tools (6) and optionally the further reinforcing fibres (10) on the further tools 9 into the preformed hollow structure (11),
- sealing the preformed hollow structure (11) with at least one final mould (12) covered with reinforcing fibres (13),
- inflating the flexible moulds (6) and the further flexible moulds (9) to form an internal support structure (14) which braces the hollow structure (11) formed from the reinforcing fibres (2), (4) and (13)
- consolidating the reinforcing fibres.

2. Method according to one of the preceding claims, **characterized in that** the rigid cores (5) and/or further rigid cores (8) are tubes.

3. Method according to any one of the preceding claims, **characterized in that** the reinforcing fibres (10) are folded or crumpled on the further tools (9) before being introduced into the preformed hollow structure (11).

4. Method according to any one of the preceding claims, **characterized in that** the inner support structure (14) has the shape of honeycombs, polygons, crosses or sliced soap bubbles.

5. Method according to any one of the preceding claims **characterized in that** the reinforcing fibres (7) and/or (10) are positioned by winding or braiding on the rigid cores (5) with the flexible tools (6) and/or winding or braiding on the further rigid cores (8) with the further flexible tools (9).

6. Method according to any one of the preceding claims, **characterised in that** thickenings (15) of reinforcing fibres are introduced at the points of contact between the inner support structure (14) and the hollow structure (11).

7. Method according to claim 6, **characterized in that** the thickenings (15) of reinforcing fibres are formed from a part of the further reinforcing fibres (10).

8. Method according to any one of the preceding claims, **characterized in that** the reinforcing fibres are dry carbon fibres.

9. Method according to any one of claims 1 to 7, **characterized in that** the reinforcing fibres are carbon fibres pre-impregnated with matrix resin.

10. Method according to any one of the preceding claims, **characterized in that** the consolidation is carried out by tempering to temperatures of 80 to 180°C.

11. Method according to any one of the preceding claims, **characterized in that** the consolidation is carried out under elevated pressure.

12. Method according to one of the preceding claims, **characterized in that** the consolidation is carried out in an autoclave.

## Revendications

1. Procédé de fabrication de boites de torsion d'ailes, d'empennages, d'éléments de commande et de systèmes hypersustentateurs d'aéronefs, comprenant les étapes consistant à
- Fournir un premier moule rigide (1),
- déposer des fibres de renforcement (2) sur cet outil de moulage rigide (1),
- fournir au moins un autre outil de moulage rigide (3),
- déposer des fibres de renfort (4) sur ces outils de moulage rigides (3),
- fixation des outils de moulage (3) avec les fibres de renforcement (4) de telle sorte que les fibres de renforcement (4) touchent en partie les fibres de renforcement (2) et forment une structure creuse (11) pouvant être formée avec au moins un autre outil de moulage,
- fournir au moins un noyau rigide (5),
- insertion de ce ou ces noyaux rigides (5) respectivement dans un outil flexible (6),
- positionnement de fibres de renforcement (7) sur les outils (6),
- retirer les noyaux rigides (5),
- fourniture d'au moins un autre noyau rigide (8),
- insertion de ce ou ces autres noyaux rigides (8) respectivement dans un autre outil flexible (9),
- positionnement optionnel d'autres fibres de renforcement 10 sur les autres outils (9),
- retrait des autres noyaux rigides (8),
- introduction des fibres de renforcement (7) sur les outils (6) et éventuellement des autres fibres de renforcement (10) sur les autres outils 9 dans la structure creuse préformée (11),
- fermer la structure creuse préformée (11) avec au moins un outil de formage final (12) recouvert de fibres de renforcement (13),
- gonfler les outils flexibles (6) et les autres outils flexibles (9) en formant une structure de support interne (14) qui rigidifie la structure creuse (11) formée par les fibres de renforcement (2), (4) et (13),
- consolider les fibres de renforcement.

2. Procédé selon l'une quelconque des revendications précédentes, **caractérisé en ce que** les noyaux rigides (5) et/ou les autres noyaux rigides (8) sont des tubes.

3. Procédé selon l'une quelconque des revendications précédentes, **caractérisé en ce que** les fibres de renfort (10) sont pliées ou froissées sur les autres outils (9) avant d'être introduites dans la structure creuse préformée (11).

4. Procédé selon l'une quelconque des revendications précédentes, **caractérisé en ce que** la structure de support interne (14) a la forme de nids d'abeilles, de polygones, de croix ou de bulles de savon découpées.

5. Procédé selon l'une quelconque des revendications précédentes, **caractérisé en ce que** les fibres de renfort (7) et/ou (10) sont positionnées par enroulement ou tressage sur les noyaux rigides (5) avec les outils flexibles (6) et/ou par enroulement ou tressage sur les autres noyaux rigides (8) avec les autres outils flexibles (9).

6. Procédé selon l'une quelconque des revendications précédentes, **caractérisé en ce que** des surépaisseurs (15) de fibres de renfort sont introduites aux points de contact de la structure interne de support (14) et de la structure creuse (11).

7. Procédé selon la revendication 6, **caractérisé en ce que** les surépaisseurs (15) de fibres de renfort sont formées à partir d'une partie des autres fibres de renfort (10).

8. Procédé selon l'une quelconque des revendications précédentes, **caractérisé en ce que** les fibres de renfort sont des fibres de carbone sèches.

9. Procédé selon l'une quelconque des revendications 1 à 7, **caractérisé en ce que** les fibres de renforcement sont des fibres de carbone pré-imprégnées de résine de matrice.

10. Procédé selon l'une quelconque des revendications précédentes, **caractérisé en ce que** la consolidation est réalisée par un recuit à des températures comprises entre 80 et 180°C.

11. Procédé selon l'une des revendications précédentes, **caractérisé en ce que** la consolidation s'effectue sous pression élevée.

12. Procédé selon l'une des revendications précédentes, **caractérisé en ce que** la consolidation s'effectue en autoclave.
